# EUROPEAN PATENT SPECIFICATION

(11) **EP 4 271 346 B1**
(45) Date of publication and mention of the grant of the patent: **09.07.2025**
(21) Application number: 20968129.5
(22) Date of filing: 30.12.2020
(51) Int. Cl.: A61H 1/02, A61H 3/00, B25J 9/00

(54) **AN EXOSKELETON SYSTEM**
EXOSKELETTSYSTEM
SYSTÈME D'EXOSQUELETTE

(43) Date of publication of application: 08.11.2023
(73) Proprietor: Ozyegin Universitesi, 34794 Cekmekoy/Istanbul (TR)
(72) Inventor: UNAL, Ramazan, 34794 Cekmekoy/Istanbul (TR); AKIN, Baris, Umraniye/ Istanbul (TR); EMRE, Sinan, Besiktas/Istanbul (TR)
(74) Representative: Kaya, Erdem
(86) International application number: PCT/TR2020/051460
(87) International publication number: WO 2022/146252

(56) References cited:
- CN-A- 106 891 359
- CN-A- 111 805 513
- JP-A- 2013 158 443
- US-A1- 2015 321 341
- US-A1- 2015 321 341
- US-A1- 2017 165 833
- US-A1- 2017 360 645
- US-A1- 2019 105 190
- KHAN HAMZA ET AL: "Bio-inspired knee joint mechanism for a hydraulic quadruped robot", 2015 6TH INTERNATIONAL CONFERENCE ON AUTOMATION, ROBOTICS AND APPLICATIONS (ICARA), IEEE, 17 February 2015 (2015-02-17), pages 325 - 331, XP032762549, DOI: 10.1109/ICARA.2015.7081168
- KHAN HAMZA; FEATHERSTONE ROY; CALDWELL DARWIN G.; SEMINI CLAUDIO: "Bio-inspired knee joint mechanism for a hydraulic quadruped robot", 2015 6TH INTERNATIONAL CONFERENCE ON AUTOMATION, ROBOTICS AND APPLICATIONS (ICARA), IEEE, 17 February 2015 (2015-02-17), pages 325 - 331, XP032762549, DOI: 10.1109/ICARA.2015.7081168

## Description

### TECHNICAL FIELD

The present invention relates to at least one exoskeleton system in order to provide walking support to people who have disability in walking or in order to provide performance improvement to healthy people, and having at least one first body for being connected to the motionless upper part of the leg and at least one second body for being connected to the motionless lower part of the leg and at least one knee embodiment provided between said first body and said second body in a manner allowing movement of the knee, and at least one leg embodiment for forming support to the foot part by being connected to the second body.

### PRIOR ART

Mechanical exoskeleton has been designed for supporting the person who wears it, for walking assistance and/or for increasing performance thereof. For instance, mechanical exoskeleton is used for supporting and/or for increasing performance of soldiers or construction workers. Moreover, development of exoskeletons which can support movement of elderly people and individuals with injuries, i.e. spinal cord injury or stroke, enables a wide medical market in the future. The other areas where advantage is provided are rescue works; heavy debris can be lifted by a lifeguard who wears this machine in collapsed buildings and at the same time, protection can be provided against falling taluses.

In the Chinese application with number CN201110292009, an exoskeleton rehabilitation robot is described. Proposed robot provides supporting of the foot of the user from the base, it is a circular support mechanism developed beside the knee. While the leg support is provided by means of a rod-like structure provided at the side part, it is apparent that ergonomic problems also occur.

US2019/105190 A1 describes artificial lower limb prosthetics and orthotic systems, particularly focusing on exoskeleton knees for various orthotic applications. It details gravity-actuated knee joint locking systems, including four-bar linkage mechanisms and springloaded locking elements that operate based on knee and foot angles during the gait cycle. while US2019/105190 A1 includes compression springs and similar components, it does not address the compensation of translational motion of the knee joint in a biomechanically compliant manner.

US2017/360645 A1 similarly discusses knee orthoses used in gait support systems. It elaborates on orthotic knee joints equipped with angle-sensitive and microprocessor-controlled release mechanisms. These systems include sensors that measure knee angles and foot pressure to control the locking and unlocking of the knee joint. However the systems described here rely heavily on electronic sensors and actuators, which can introduce complexity and potential points of failure.

US2017/165833 A1 document describes a wearable robot device that provides audible feedback to the user based on the amount of torque required for operation. This system includes a controller that determines the required torque and an output unit that emits sound with varying frequencies, strength, and tone based on this torque.

US2015/321341 document details an exoskeleton system designed to optimize power efficiency by reducing the gravity-induced moments on joints. It emphasizes the strategic positioning of joints to align with parasagittal planes of human extremities, thereby minimizing the need for powerful actuators.

The mechanical exoskeleton can also be used in military fields for augmenting the performance development of the soldiers. However, around the knee joint, ergonomics problems occur which result from the unfavorable coinciding of the inner frame and the exoskeleton system.

As a result, because of the aforementioned problems, an improvement is required in the related technical field.

### BRIEF DESCRIPTION OF THE INVENTION

The present invention relates to an exoskeleton system, for eliminating the aforementioned disadvantages and for bringing new advantages to the related technical field.

An object of the present invention is to provide an exoskeleton system which allows ergonomic usage such that it does not project from the leg periphery.

In order to realize the abovementioned objects and the objects which are to be deducted from the detailed description below, the present invention is at least one exoskeleton system in order to provide walking support to people who have disability in walking or in order to provide performance improvement to healthy people, and having at least one first body for being connected to the motionless upper part of the leg and at least one second body for being connected to the motionless lower part of the leg and at least one knee embodiment provided between said first body and said second body in a manner allowing movement of the knee, and at least one leg embodiment for forming support to the foot part by being connected to the second body. Accordingly, the improvement of the present invention is that said knee embodiment comprises at least one crossed four-bar linkage provided in a manner supporting the bio-mechanical motion of the knee joint from the side (sagittal plane) part of the knee, said crossed four-bar linkage comprises at least one movement element which can be manipulated by means of at least one energy storage element which allows carrying load, in order to compensate for the translational motion realized by the knee joint while rotating. Thus, an ergonomic usage is provided by supporting the bio-mechanical motion of the knee joint from the side part.

In a possible embodiment of the present invention, at least one first part of the knee embodiment where the knee embodiment is connected to the first body and at least one second part where the knee embodiment is connected to the second body are provided in a manner extending from the front part of the knee towards the rear part of the knee in a compliant manner to the bio-mechanics of the knee joint. Thus, coinciding of the inner frame of the user and the exoskeleton system is provided, and thus, an ergonomic usage is provided.

In another possible embodiment of the present invention, for supporting the foot ankle from the front part thereof, said foot embodiment comprises at least one connection bracket connected to the second body so as not to project from the foot periphery. Thus, the foot and ankle joint is supported in a manner not protruding outwardly.

In another possible embodiment of the present invention, the foot embodiment comprises at least one foot plate which can be connected to the foot base, and at least one finger plate associated with said foot plate in a movable manner with respect to each other. Thus, the foot base and the finger part are supported.

In another possible embodiment of the present invention, the first body is connected to the leg upper part by means of at least one thigh connection element. Thus, the first body is connected to the thigh part of the leg in a manner completely seating from the front side thereof.

In another possible embodiment of the present invention, the second body is connected to the leg lower part by means of at least one calf connection element. Thus, the second body is connected to the shank (tibia) part of the leg in a manner completely seating from the front side thereof.

In another possible embodiment of the present invention, the crossed four-bar linkage is configured to fit the user around the knee and the foot part of the foot embodiment. Thus, it is enabled that the exoskeleton system fits the leg and foot periphery, and since it does not project outwardly, a usage advantage is provided.

### BRIEF DESCRIPTION OF THE FIGURES

In Figure 1, a representative perspective view of the subject matter exoskeleton system is connected onto a leg is given.
In Figure 2, a representative perspective view of a leg embodiment of the subject matter exoskeleton system is given.
In Figure 3, a representative perspective view of crossed four-bar linkage in a knee embodiment of the subject matter exoskeleton system is given.
In Figure 4, a representative perspective view of a condition where the support of the subject matter exoskeleton system is disengaged is given.
In Figure 5, a representative perspective view of a condition where the support of the subject matter exoskeleton system is engaged is given.

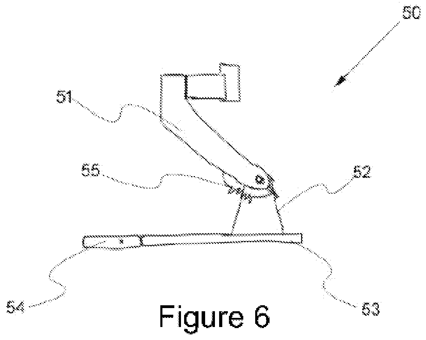

In Figure 6, a representative perspective view where a plantar-flexion support element is positioned in a leg embodiment of the subject matter exoskeleton system is given.

### DETAILED DESCRIPTION OF THE INVENTION

In this detailed description, the subject matter exoskeleton system (10) is explained with references to examples without forming any restrictive effect only to make the subject more understandable.

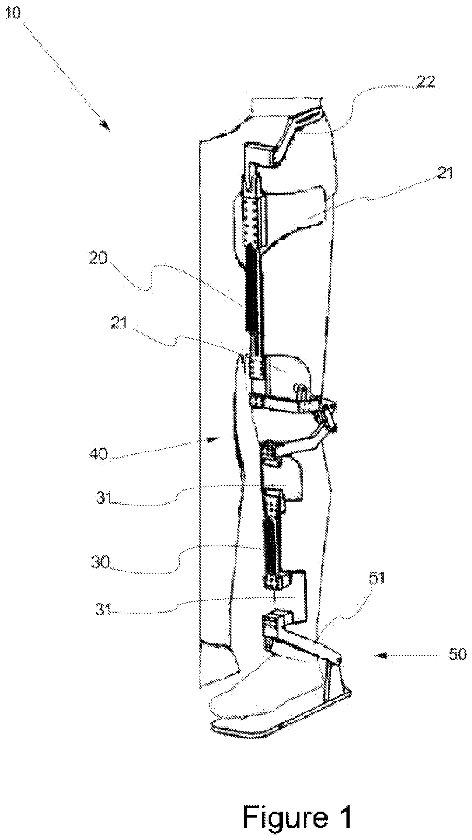

In Figure 1, a representative perspective view where the subject matter exoskeleton system (10) is connected onto a leg is given. Accordingly, the exoskeleton system (10) is a mechanical support associated with the leg from outside for providing walking support in people who have disability in walking or for providing performance improvement in healthy people. In humans, leg is the organ which extends from the waist part to the foot part by means of two motionless parts and two joints. The part which extends from the buttock to the knee joint is named as thigh and the part which extends from the knee joint to the ankle joint is named as shank. The exoskeleton system (10) comprises at least one first body (20) for being connected to the thigh part of the leg from the front side thereof. Said first body (20) is a structural support element and it is essentially a frame. The first body (20) comprises at least one waist connection element (22) provided in a manner connected to the waist part of the user. The first body (20) comprises at least one thigh connection element (21). Said thigh connection element (21) is essentially a holder structure and provides the connection of the first body (20) to the thigh part of the leg. In a possible embodiment of the present invention, two thigh connection elements (21) are provided where one of them is connected to the upper region of the thigh part and where the other one of them is connected to the part of the thigh part which is relatively close to the knee.

The exoskeleton system (10) comprises at least one second body (30) to be connected to the calf part of the leg from the front side thereof. Said second body (30) is a structural support element and is essentially a frame. The second body (30) comprises at least one shank connection element (31). Said shank connection element (31) is essentially a holder structure and provides the second body (30) to be connected to the calf part of the leg. In a possible embodiment of the present invention, two shank connection elements (31) are provided where one of them is connected to the upper region of the calf part and where the other one of them is connected to the part of the calf part which is relatively close to the foot.

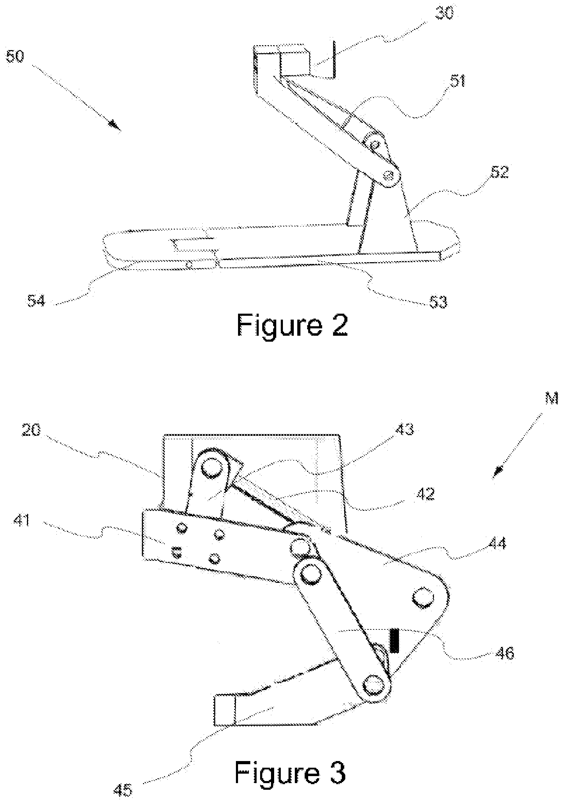

In Figure 2, a representative perspective view of a leg embodiment (50) of the subject matter exoskeleton system (10) is given. Accordingly, said foot embodiment (50) is a support frame provided for forming support to the foot part of the exoskeleton system (10) and particularly for forming support to the ankle joint. The foot embodiment (50) is connected to the second body (30). The foot embodiment (50) comprises at least one foot plate (53). Said foot plate (53) is a partially flat plate provided at equal dimensions as the user foot base. The foot embodiment (50) comprises at least one finger plate (54). Said finger plate (54) is a plate which allows partially positioning on the finger parts of the user. The finger plate (54) and the foot plate (53) are configured to be movable with respect to each other. The movement is formed naturally in the walking behavior that is supported. The foot plate (53) and the finger plate (54) are moved concerning for walking behavior during walking, and the foot embodiment (50) supports the ankle joint of the user. The foot embodiment (50) comprises at least one plantar-flexion support element (55). Said plantar-flexion support element (55) is an auxiliary item for supporting the leg in the movement towards the plantar side during ankle push off.

The foot embodiment (50) comprises at least one connection bracket (51) for supporting the ankle joint from the front part thereof. Said connection bracket (51) provides the leg embodiment (50) to be connected to the second body (30) in a manner fitting the leg and not protruding from the leg periphery. The connection bracket (51) essentially has a geometric structure that is similar to inverse V comprising two arms. The connection bracket (51) is connected to the foot plate (53) by means of at least one plate connection element (52). Said plate connection element (52) is essentially a supporting part. The plate connection element (52) is mutually provided to be connected with both arms of the connection bracket (51).

The exoskeleton system (10) comprises at least one knee embodiment (40). Said knee embodiment (40) provides the knee joint to move between the first body (20) and the second body (30). The knee embodiment (40) comprises at least one crossed four-bar linkage (M) provided in a manner supporting the bio-mechanical motion of the knee joint from the rear part of the knee. Said crossed four-bar linkage (M) is a movement mechanism for compensating the translational motion realized by the knee joint while rotating. The crossed four-bar linkage (M) is connected to the first body (20) by means of at least one first part (41). The crossed four-bar linkage (M) is connected to the second body (30) by means of at least one second part (45). Said first part (41) and said second part (45) are provided in a manner extending from the front part of the knee joint towards the rear part of the knee joint in the sagittal plane in a compliant manner to the bio-mechanics of the knee joint.

The crossed four-bar linkage (M) comprises at least one movement element (44). Said movement element (44) is a movable plate provided essentially in triangular form. The movement element (44) is associated with the first part (41) from one end of the long edge and is associated with the second part (45) from the other part thereof. The movement element (44) is connected to at least one energy storage element (42) from another end thereof. Said energy storage element (42) is essentially a spring and provides driving of the movement element (44). The energy storage element (42) is connected to at least one positioning element (43) from the other side thereof. Said positioning element (43) is a support which provides connection of the energy storage element (42) to the first body (20). The crossed four-bar linkage (M) comprises at least one third part (46). Said third part (46) is essentially a linear supporting element connected between the first part (41) and the second part (45).

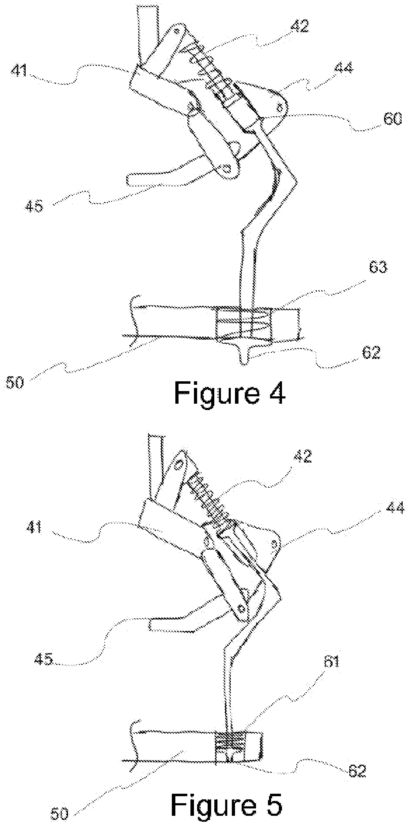

In Figure 4 and Figure 5, the representative perspective views where the subject matter exoskeleton system (10) support is disengaged and where the subject matter exoskeleton system (10) support is engaged are given respectively. Accordingly, in the crossed four-bar linkage (M), at least one activation housing (60) is provided where the energy storage element (42) can move therein. Said activation housing (60) is essentially a slot which will provide engagement and disengagement of the support. The exoskeleton system (10) comprises at least one locking element (62). Said locking element (62) is essentially provided in a sliding form. The locking element (62) is connected to at least one housing (63) for passing through the foot base part. Said housing (63) is essentially a channel provided at the rear part of the foot embodiment (50). After the foot is elevated from the ground, the locking element (62) moves downwardly by means of at least one spring (61). Said spring (61) is compressed during upward movement of the locking element (62) when the heel touches the ground, and when the heel is elevated from the ground, the spring (61) returns the stored energy and provides downward movement of the locking element (62). When the locking element (62) passes to the high position, it fixes the position of the energy storage element (42) and provides engagement thereof. Thus, during weight acceptance, the energy storage element (42) realizes weight acceptance support by means of storing energy. When the heel is elevated from the ground, the locking element (62) passes to the low position and provides free movement of the energy storage element (42) in the activation housing (60). Thus, since energy is not stored, the energy storage element (42) has been disengaged, and the free rotation of the knee is provided. This release is needed for not preventing the free flexion of the knee.

By means of all these embodiments, the exoskeleton system (10) is connected to the knee periphery by means of the knee embodiment (40) and is connected to the periphery of the ankle joint by means of the foot embodiment (50), and thanks to this, it does not project from the leg and foot periphery. By being completely fit to the user's leg, it is prevented from getting attached to an outer element. By means of the crossed four-bar linkage (M), an ergonomic usage is presented to the user by means of aligning of the inner frame with the exoskeleton system (10). The energy storage element (42) provides support to the movement of the knee.

### REFERENCE NUMBERS

- 10: Exoskeleton system

- 20: First body
- 21: Thigh connection element
- 22: Waist connection element

- 30: Second body
- 31: Shank connection element

- 40: Knee embodiment
- 41: First part
- 42: Energy storage element
- 43: Positioning element
- 44: Movement element
- 45: Second part
- 46: Third part

- 50: Foot embodiment
- 51: Connection bracket
- 52: Plate connection element
- 53: Foot plate
- 54: Finger plate
- 55: Plantar-flexion support element

- 60: Activation housing
- 61: Spring
- 62: Locking element
- 63: Housing

- M: Crossed Four-Bar Linkage

## Claims

1. At least one exoskeleton system (10) in order to provide walking support to people who have disability in walking or in order to provide performance improvement to healthy people, and having at least one first body (20) for being connected to the motionless upper part of the leg and at least one second body (30) for being connected to the motionless lower part of the leg and at least one knee embodiment (40) provided between said first body (20) and said second body (30) in a manner allowing motion of the knee joint, and at least one leg embodiment (50) for forming support to the foot part by being connected to the second body (30), **wherein** said knee embodiment (40) comprises at least one crossed four-bar linkage (M) provided in a manner supporting the bio-mechanical motion of the knee joint from the side (sagittal plane) part of the knee joint,
said crossed four-bar linkage (M) comprising:
a first part (41) connected to the first body (20),
a second part (45) connected to the second body (30),
a third part (46) connecting the first part (41) and the second part (45), allowing motion compliant with the bio-mechanics of the knee joint,
a movement element (44),
wherein the movement element (44) is associated with the first part (41) from one end of the long edge and is associated with the second part (45) from the other part thereof,
an energy storage element (42) connected to the movement element (44) and a positioning element (43), wherein the positioning element (43) is a support connected to the first body (20)
wherein the energy storage element (42) provides support to the movement of the knee, the exoskeleton system (10) further comprises;
an activation housing (60) allowing the energy storage element (42) to move within the activation housing (60), wherein said activation housing (60) is essentially a slot which will provide engagement and disengagement of the support,
a locking element (62),
said crossed four-bar linkage (M) further comprises at least one spring (61), said spring (61) being configured to be compressed during upward movement of the locking element (62) when the heel touches the ground, and wherein, when the locking element (62) passes to the high position, the spring (61) fixes the position of the energy storage element (42) and provides engagement thereof, such that during weight acceptance, the energy storage element (42) realizes weight acceptance support by means of storing energy, and said spring (61) also drives the locking element (62) downwardly within the activation housing (60) when the heel is elevated from the ground, thereby the locking element (62) allows free movement of the energy storage element (42) in the activation housing (60).

2. The exoskeleton system (10) according to claim 1, **wherein** at least one first part (41) of the knee embodiment (40) where the knee embodiment (40) is connected to the first body (20) and at least one second part (45) where the knee embodiment (40) is connected to the second body (30) are provided in a manner extending from the front part of the knee towards the rear part of the knee in a compliant manner to the bio-mechanics of the knee joint.

3. The exoskeleton system (10) according to claim 1, **wherein** for supporting the ankle joint from the front part thereof, said foot embodiment (50) comprises at least one connection bracket (51) connected to the second body (30) so as not to project from the foot periphery.

4. The exoskeleton system (10) according to claim 1, **wherein** the foot embodiment (50) comprises at least one foot plate (53) which can be connected to the foot base, and at least one finger plate (54) associated with said foot plate (53) in a movable manner with respect to each other.

5. The exoskeleton system (10) according to claim 1, **wherein** the first body (20) is connected to the leg upper part by means of at least one thigh connection element (21).

6. The exoskeleton system (10) according to claim 1, **wherein** the second body (30) is connected to the leg lower part by means of at least one shank connection element (31).

## Patentansprüche

1. Mindestens ein Exoskelettsystem (10) zur Bereitstellung einer Gehstütze für Menschen mit Gehbehinderung oder zur Bereitstellung einer Leistungssteigerung für gesunde Menschen, und mit mindestens einem ersten Körper (20) zur Verbindung mit dem unbeweglichen oberen Teil des Beins und mindestens einem zweiten Körper (30) zur Verbindung mit dem unbeweglichen unteren Teil des Beins und mindestens einer Knieausführung (40), die zwischen dem genannten ersten Körper (20) und dem genannten zweiten Körper (30) derart vorgesehen ist, dass sie eine Bewegung des Kniegelenks ermöglicht, und mindestens einer Beinausführung (50) zur Bildung einer Stütze für den Fußteil durch Verbindung mit dem zweiten Körper (30), wobei die genannte Knieausführung (40) mindestens ein gekreuztes Viergelenk (M) umfasst, das derart vorgesehen ist, dass es die biomechanische Bewegung des Kniegelenks vom seitlichen (Sagittalebene) Teil des Kniegelenks aus unterstützt,
das genannte gekreuzte Viergelenk (M) umfasst:
einen ersten Teil (41), der mit dem ersten Körper (20) verbunden ist,
einen zweiten Teil (45), der mit dem zweiten Körper (30) verbunden ist,
einen dritten Teil (46), der den ersten Teil (41) und den zweiten Teil (45) verbindet, welcher eine mit der Biomechanik des Kniegelenks konforme Bewegung ermöglicht,
ein Bewegungselement (44),
wobei das Bewegungselement (44) von einem Ende der langen Kante her dem ersten Teil (41) zugeordnet ist und von dem anderen Teil her dem zweiten Teil (45) zugeordnet ist,
ein Energiespeicherelement (42), das mit dem Bewegungselement (44) verbunden ist, und ein Positionierungselement (43), wobei das Positionierungselement (43) ein mit dem ersten Körper (20) verbundener Träger ist
wobei das Energiespeicherelement (42) eine Unterstützung für die Bewegung des Knies bereitstellt, das Exoskelettsystem (10) weiterhin umfasst;
ein Aktivierungsgehäuse (60), das es dem Energiespeicherelement (42) ermöglicht, sich innerhalb des Aktivierungsgehäuses (60) zu bewegen, wobei das genannte Aktivierungsgehäuse (60) im Wesentlichen ein Schlitz ist, der das Eingreifen und Lösen des Trägers bereitstellt,
ein Verriegelungselement (62),
das genannte gekreuzte Viergelenk (M) ferner mindestens eine Feder (61) umfasst, die genannte Feder (61) so konfiguriert ist, dass sie während der Aufwärtsbewegung des Verriegelungselements (62) zusammengedrückt wird, wenn der Absatz den Boden berührt, und wobei, wenn das Verriegelungselement (62) in die hohe Position übergeht, die Feder (61) die Position des Energiespeicherelements (42) fixiert und einen Eingriff mit diesem bereitstellt, so dass während der Gewichtsaufnahme das Energiespeicherelement (42) eine Gewichtsaufnahmeunterstützung mittels Speicherung von Energie realisiert, und die genannte Feder (61) auch das Verriegelungselement (62) innerhalb des Aktivierungsgehäuses (60) nach unten treibt, wenn der Absatz vom Boden angehoben wird, wodurch das Verriegelungselement (62) eine freie Bewegung des Energiespeicherelements (42) in dem Aktivierungsgehäuse (60) ermöglicht.

2. Das Exoskelettsystem (10) nach Anspruch 1, **wobei** mindestens ein erster Teil (41) der Knieausführung (40), an dem die Knieausführung (40) mit dem ersten Körper (20) verbunden ist, und mindestens ein zweiter Teil (45), an dem die Knieausführung (40) mit dem zweiten Körper (30) verbunden ist, derart vorgesehen sind, dass sie sich vom vorderen Teil des Knies zum hinteren Teil des Knies in einer der Biomechanik des Kniegelenks nachgiebigen Weise erstrecken.

3. Das Exoskelettsystem (10) nach Anspruch 1, **wobei** zur Abstützung des Knöchelgelenks vom vorderen Teil desselben aus die genannte Fußausführung (50) mindestens einen Verbindungsbügel (51) umfasst, der mit dem zweiten Körper (30) so verbunden ist, dass er nicht über den Fußumfang hinausragt.

4. Das Exoskelettsystem (10) nach Anspruch 1, **wobei** die Fußausführung (50) mindestens eine Fußplatte (53), die mit der Fußbasis verbunden werden kann, und mindestens eine Fingerplatte (54) umfasst, die mit der genannten Fußplatte (53) in einer beweglichen Weise in Bezug aufeinander verbunden ist.

5. Das Exoskelettsystem (10) nach Anspruch 1, **wobei** der erste Körper (20) über mindestens ein Schenkelverbindungselement (21) mit dem Beinoberteil verbunden ist.

6. Das Exoskelettsystem (10) nach Anspruch 1, **wobei** der zweite Körper (30) über mindestens ein Wadeverbindungselement (31) mit dem Beinunterteil verbunden ist.

## Revendications

1. Au moins un système d'exosquelette (10) afin de fournir une aide à la marche aux personnes qui ont un handicap à la marche ou afin d'améliorer les performances des personnes en bonne santé, et ayant au moins un premier corps (20) pour être connecté à la partie supérieure immobile de la jambe et au moins un deuxième corps (30) pour être connecté à la partie inférieure immobile de la jambe et au moins un ensemble de genou (40) fourni entre ledit premier corps (20) et ledit deuxième corps (30) d'une manière permettant le mouvement de l'articulation du genou, et au moins un ensemble de jambe (50) pour former un support à la partie du pied en étant connecté au deuxième corps (30), **dans lequel** ledit ensemble de genou (40) comprend au moins une liaison à quatre barres croisées (M) fournie de manière à supporter le mouvement biomécanique de l'articulation du genou à partir de la partie latérale (plan sagittal) de l'articulation du genou,
ladite liaison à quatre barres croisées (M) comprenant:
une première partie (41) connectée au premier corps (20),
une deuxième partie (45) connectée au deuxième corps (30),
une troisième partie (46) connectant la première partie (41) et la deuxième partie (45), permettant un mouvement conforme à la biomécanique de l'articulation du genou,
un élément de mouvement (44),
dans lequel l'élément de mouvement (44) est associé à la première partie (41) à partir d'une extrémité du bord long et est associé à la deuxième partie (45) à partir de l'autre partie,
un élément de stockage d'énergie (42) connecté à l'élément de mouvement (44) et un élément de positionnement (43), dans lequel l'élément de positionnement (43) est un support connecté au premier corps (20)
dans lequel l'élément de stockage d'énergie (42) fournit un support au mouvement du genou, le système d'exosquelette (10) comprend en outre;
un boîtier d'activation (60) permettant à l'élément de stockage d'énergie (42) de se déplacer à l'intérieur du boîtier d'activation (60), dans lequel ledit boîtier d'activation (60) est essentiellement une fente qui permet l'engagement et le désengagement du support,
un élément de verrouillage (62),
ladite liaison à quatre barres croisées (M) comprend en outre au moins un ressort (61), ledit ressort (61) étant configuré pour être comprimé pendant le mouvement vers le haut de l'élément de verrouillage (62) lorsque le talon touche le sol, et dans lequel, lorsque l'élément de verrouillage (62) passe en position haute, le ressort (61) fixe la position de l'élément de stockage d'énergie (42) et assure l'engagement de celui-ci, de sorte que pendant la prise de poids, l'élément de stockage d'énergie (42) supporte la prise de poids en stockant de l'énergie, et que ledit ressort (61) entraîne également l'élément de verrouillage (62) vers le bas à l'intérieur du boîtier d'activation (60) lorsque le talon est soulevé du sol, de sorte que l'élément de verrouillage (62) permet le libre mouvement de l'élément de stockage d'énergie (42) à l'intérieur du boîtier d'activation (60).

2. Le système d'exosquelette (10) selon la revendication 1, **dans lequel** au moins une première partie (41) de l'ensemble de genou (40) où l'ensemble de genou (40) est connecté au premier corps (20) et au moins une deuxième partie (45) où l'ensemble de genou (40) est connecté au deuxième corps (30) sont fournies d'une manière qui s'étend de la partie avant du genou vers la partie arrière du genou d'une manière conforme à la biomécanique de l'articulation du genou.

3. Le système d'exosquelette (10) selon la revendication 1, **dans lequel** pour supporter l'articulation de la cheville à partir de sa partie avant, ledit ensemble de pied (50) comprend au moins un support de connexion (51) connecté au second corps (30) de manière à ne pas dépasser de la périphérie du pied.

4. Le système d'exosquelette (10) selon la revendication 1, **dans lequel** l'ensemble de pied (50) comprend au moins une plaque de pied (53) qui peut être connectée à la base du pied, et au moins une plaque de doigt (54) associée à ladite plaque de pied (53) de manière mobile l'une par rapport à l'autre.

5. Le système d'exosquelette (10) selon la revendication 1, **dans lequel** le premier corps (20) est connecté à la partie supérieure de la jambe au moyen d'au moins un élément de connexion de cuisse (21).

6. Le système d'exosquelette (10) selon la revendication 1, dans lequel le second corps (30) est connecté à la partie inférieure de la jambe au moyen d'au moins un élément de connexion de jarret (31).
